# EUROPÄISCHE PATENTSCHRIFT

(11) **EP 2 044 904 B1**
(45) Veröffentlichungstag und Bekanntmachung des Hinweises auf die Patenterteilung: **19.05.2010**
(21) Anmeldenummer: 07018998.0
(22) Anmeldetag: 27.09.2007
(51) Int. Cl.: A61C 19/04

(54) **Dentales Handstück zur Behandlung von Wurzelkanälen**
Dental handpiece for the treatment of root canals
Dispositif d'authentification

(43) Veröffentlichungstag der Anmeldung: 08.04.2009
(73) Patentinhaber: W & H Dentalwerk Bürmoos GmbH, 5111 Bürmoos (AT)
(72) Erfinder: Teufelberger, Gunter, 5111 Bürmoos (AT); Brandstätter, Andreas, 5120 St. Pantaleon 208 (AT); Paffinger, Nikolaus, 5120 St. Pantaleon (AT); Spitzauer, Josef, 5110 Oberndorf (AT)

(56) Entgegenhaltungen:
- DE-A1- 19 520 765
- FR-A- 2 864 442

## Beschreibung

Die vorliegende Erfindung betrifft ein dentales Handstück zur Behandlung von Wurzelkanälen und insbesondere zur Messung der Länge eines Wurzelkanals nach dem Oberbegriff des Patentanspruchs 1.

Ein derartiges Handstück ist aus der Patentanmeldung EP 1.642.547 A1 bekannt, deren Inhalt vollständig hierin aufgenommen ist. Das darin offenbarte Handstück weist eine Vorrichtung zur Übertragung von elektrischen Messsignalen der Wurzelkanal-Längenmessung auf, das durch die Elemente zur Übertragung der Antriebsbewegung, insbesondere durch die Antriebswellen, Getriebe und Zahnräder des Handstücks, gebildet ist.

Die Übertragung der Messsignale der Wurzelkanal-Längenmessung durch die Elemente zur Übertragung der Antriebsbewegung hat den Vorteil, dass bestehende, vorhandene Bauteile zur Messsignalleitung verwendet werden können. Nachteilig sind jedoch die zum Teil geringe Qualität der Signalübertragung und insbesondere der Verlust von Messsignalen, vor allem im Bereich der Schnittstellen zwischen den Elementen zur Übertragung der Antriebsbewegung, zum Beispiel zwischen einzelnen Wellen oder Wellenteilen.

Die Patentanmeldung DE 195 20 765 A1 offenbart ein Handstück zur Behandlung und Längenmessung von Wurzelkanälen, bei dem gemäß einem Ausführungsbeispiel die elektrischen Messsignale über die Zahnräder übertragen werden, die die Werkzeugaufnahme mit der Antriebswelle verbinden. Um während der Rotation ein ,außer Kontakt geraten' der beiden Zahnräder und damit eine Unterbrechung der Übertragung der Messsignale zu verhindern, ist bei diesem Ausführungsbeispiel an der Antriebswelle eine Scheibenfeder vorgesehen, die die Antriebswelle und das damit verbundene Zahnrad gegen das Zahnrad der Werkzeugaufnahme drückt. Gemäß einem alternativen Ausführungsbeispiel wird das Messsignal von der Werkzeugaufnahme auf das Kopfgehäuse des Handstücks übertragen.

Es besteht somit die Aufgabe ein Handstück zur Behandlung von Wurzelkanälen mit einer Vorrichtung zur Übertragung der Messsignale, die durch die Elemente zur Übertragung der Antriebsbewegung gebildet ist, derart auszubilden, dass eine verbesserte, sichere Signalübertragung und insbesondere ein reduzierter Verlust von Messsignalen während der Signalübertragung gewährleistet ist. Entsprechend soll ein Verfahren zur Herstellung eines Handstücks mit einer verbesserten Signalübertragung geschaffen werden.

Ein weiterer Nachteil des oben beschriebenen Handstücks besteht darin, dass die Weiterleitung der Messsignale am Anschlussende des Handstücks über den Mitnehmer auf eine Welle eines daran gekuppelten Anschlussteils, zum Beispiel einer Kupplung, erfolgt. Es liegt somit eine weitere Schnittstelle mit lösbar und mit einem Spiel miteinander verbundenen Wellen vor, an der es zu mangelhaften Signalübertragung und zum Verlust von Messsignalen kommt. Zusätzlich erfordert die Weiterleitung der Messsignale über den Mitnehmer des Handstücks eine entsprechend aufwendige Ausbildung des Anschlussteils mit Isolationsmitteln zur elektrischen Isolierung der Welle des Anschlussteils.

Es besteht somit die Aufgabe ein Handstück zur Behandlung von Wurzelkanälen auszubilden, das eine verbesserte Weiterleitung der Messsignale auf das Anschlussteil ermöglicht.

Die Erfindungsgemäße Lösung dieser Aufgabe ist durch den Gegenstand des Anspruchs 1 gegeben.

Diese Ausgestaltung hat den Vorteil, dass durch die Trennung der beiden Verbindungsmittel in separate Verbindungsmittel mit getrennten Aufgaben, i.e. der mechanischen und der elektrischen Verbindung, die Übertragung der elektrischen Messsignale nicht oder zumindest nicht ausschließlich über die Verbindungsmittel zur Übertragung der Antriebsbewegung erfolgt, wie dies aus dem Stand der Technik bekannt ist. Da die Bauteile der Verbindungsmittel zur Übertragung der Antriebsbewegung, die zum Beispiel Zahnräder, Ritzel, Exzenterstifte und andere Getriebeteile umfassen, einander mit einem gewissen Spiel kontaktieren, kommt es während des Betriebs des Handstücks immer wieder zu einer Trennung dieser Bauteile und somit zu einer Unterbrechung der Signalleitung. Aufgrund der hohen Messfrequenz während der Bestimmung der Wurzelkanaltiefe, bei der bis zu 2.000 Messsignale pro Sekunde erzeugt werden, und der äußerst delikaten und anspruchsvollen endodontischen Behandlung, zu deren Unterstützung die Wurzelkanallängenmessung durchgeführt wird, sind derartige Unterbrechungen der Signalleitung verbunden mit dem Verlust der Messsignale und Messdaten nicht akzeptabel. Durch die oben beschriebene Ausgestaltung werden diese Nachteile eliminiert.

Die Ausbildung der zweiten Verbindungsmittel als Gleit- oder Schleifkontakt garantiert eine besonders sichere Signalübertragung, unabhängig von den veränderbaren und gegebenenfalls unterschiedlichen Drehzahlen der Werkzeugaufnahme und der Triebeinheit. Die Gleit- oder Schleifkontakte sind insbesondere derart ausgebildet, dass sie das Spiel und die Trennungen zwischen den Bauteilen der Verbindungsmittel zur Übertragung der Antriebsbewegung kompensieren oder überbrücken, so dass eine kontinuierliche elektrische Verbindung zwischen der Werkzeugaufnahme und der Triebeinheit gegeben ist und es zu keiner Unterbrechung der Signalleitung kommt. Dies wird in einem Ausführungsbeispiel dadurch erreicht, dass die zweiten Verbindungsmittel beweglich, insbesondere verschiebbar, in Bezug auf die ersten Verbindungsmittel ausgebildet sind, wodurch eine Relativbewegung zwischen der Werkzeugaufnahme und der Triebeinheit ausgleichbar ist. Alternativ sind die zweiten Verbindungsmittel derart beschaffen, dass sie eine veränderbare Längenausdehnung aufweisen.

Erfindungsgemäß sind die zweiten Verbindungsmittel an der Triebeinheit befestigt und kontaktierend gegen die Werkzeugaufnahme vorgespannt, wobei die zweiten Verbindungsmittel zumindest teilweise in einer Aufnahme der Triebeinheit angeordnet sind. Aufgrund des geringen verfügbaren Platzes in Handstücken, insbesondere im Handstückkopf und im Bereich des Übergangs vom Handstückkopf zum Halsteil, ist diese Ausgestaltung des Handstücks von großem Nutzen, da die an bzw. in der Triebeinheit bzw. in der Antriebswelle angeordneten zweiten Verbindungsmittel kaum zusätzlichen Platz einnehmen.

In einem bevorzugten Ausführungsbeispiel sind die zweiten Verbindungsmittel dazu elastisch federnd ausgebildet und umfassen besonders bevorzugt ein Federelement, insbesondere eine Spiralfeder. Je nach Ausführungsbeispiel spannt das Federelement weitere Bauteile der zweiten Verbindungsmittel gegen die Werkzeugaufnahme und / oder die Triebeinheit vor oder leitet selbst die Messsignale direkt oder indirekt weiter. In einem besonders bevorzugten Ausführungsbeispiel kontaktiert das Federelement oder die Enden davon direkt die Werkzeugaufnahme und die Triebeinheit und leitet die Messsignale dazwischen weiter, wodurch ein äußerst einfacher und kostengünstiger Aufbau der zweiten Verbindungsmittel realisierbar ist.

In einem Ausführungsbeispiel ist die Außenhülse mehrteilig aufgebaut, insbesondere sind der Handstückkopf und der daran anschließende Griff- und Halsteil voneinander trennbar. In einem bevorzugten Ausführungsbeispiel ist die Außenhülse einteilig aufgebaut, sie umfasst also auch den Handstückkopf. Dieser Aufbau erleichtert die Montage des Handstücks wesentlich.

Die Anschlussvorrichtung des Handstücks ist bevorzugt als bekannte Steck- oder Steck-Drehkupplung ausgebildet, die Anschlüsse an eine Steuer- und Auswerteeinheit, an einen Messkreis mit einer Stromquelle und an eine Antriebseinheit aufweist. In einem bevorzugten Ausführungsbeispiel ist die Antriebseinheit, die zum Beispiel als Elektromotor, Druckgas betriebener Motor oder Vibrationsantrieb ausgebildet ist, direkt an das Handstück bzw. an die Anschlussvorrichtung gekuppelt. Die Steuer- und Auswerteeinheit sowie der Messkreis mit der Stromquelle sind entweder vollständig oder teilweise im Handstück enthalten oder befinden sich vollständig oder teilweise in einem eigenen Steuergerät, das mit dem Handstück in bekannter Weise über einen Versorgungsschlauch verbunden oder verbindbar ist.

Die elektrisch leitende Werkzeugaufnahme ist als kraft- oder formschlüssige, metallische Werkzeugaufnahme zum lösbaren Anschluss eines Werkzeugs, zum Beispiel eines rotierenden Bohrers, einer hin- und her bewegbaren Feile oder einer Reibahle, ausgebildet. Sie ist in bekannter Weise derart im Handstückkopf aufgenommen und gelagert, dass sie durch die Triebeinheit in eine rotierende Bewegung oder in eine Hubbewegung versetzbar ist.

Die Triebeinheit erstreckt sich von der Anschlussvorrichtung durch den Griff- und Halsteil des Handstücks bis zur Werkzeugaufnahme und überträgt die von der Antriebseinheit erzeugte Antriebsbewegung auf die Werkzeugaufnahme. Die Triebeinheit besteht in einem Ausführungsbeispiel aus mehreren Wellen oder Wellenteilen, die zumindest teilweise gewinkelt zueinander angeordnet und durch ein oder mehrere Getriebe miteinander verbunden sein können. In einem bevorzugten, im Weiteren detailliert beschriebenen Ausführungsbeispiel ist die Triebeinheit im Wesentlichen gerade ausgebildet. Zumindest ein Teil der Triebeinheit, zum Beispiel eine Welle oder ein Wellenabschnitt, ist aus elektrisch leitendem Material, insbesondere Stahl, hergestellt, so dass es zur Übertragung der elektrischen Messsignale der Wurzelkanallängenmessung dient und somit Teil einer Vorrichtung zur Übertragung von elektrischen Messsignalen ist.

Über erste mechanische Verbindungsmittel zur Übertragung der Antriebsbewegung, zum Beispiel Zahnräder, Ritzel, Exzenterstifte oder Langlöcher für Exzenter, wird die Antriebsbewegung auf die Werkzeugaufnahme übertragen. Aufgrund der zweiten, elektrisch leitenden Verbindungsmittel zur Übertragung der elektrischen Messsignale ist es nicht notwendig, dass die ersten Verbindungsmittel aus elektrisch leitendem Material bestehen. In einem Ausführungsbeispiel bestehen sie aus elektrisch isolierendem Material oder sind damit beschichtet, zum Beispiel mit Keramik, so dass sie als Isoliermittel, zum Beispiel zur Isolierung der metallischen Außenhülse des Handstücks, dienen. In einem anderen Ausführungsbeispiel bestehen die ersten Verbindungsmittel aus elektrisch leitendem Material, zum Beispiel aus Metall, insbesondere aus Stahl, so dass sie zusätzlich zu den zweiten Verbindungsmitteln und zur Absicherung der Signalübertragung elektrische Messsignale der Wurzelkanallängenmessung übertragen.

In einem Ausführungsbeispiel kontaktieren die beiden Verbindungsmittel die Werkzeugaufnahme an unterschiedlichen Stellen. Diese räumliche Trennung der Kontaktstellen an der Werkzeugaufnahme hat den Vorteil, dass Schmiermittel oder reibungsverringernde Zusätze oder Beschichtungen, die insbesondere für das dauerhafte und verschleißarme Funktionieren der ersten Verbindungsmittel zur Übertragung der Antriebsbewegung notwendig sind, die jedoch die Übertragung der elektrischen Messsignale beeinflussen oder unterbinden können, beabstandet von den zweiten Verbindungsmitteln aufgebracht und eingesetzt werden können.

In einem weiteren Ausführungsbeispiel weisen die zweiten Verbindungsmittel einen Stift oder eine Hülse mit einem abgerundeten, insbesondere kugeligen, Ende auf. Dadurch werden in vorteilhafter Weise die Kontaktfläche zwischen der Werkzeugaufnahme und den zweiten Verbindungsmitteln und damit der Reibungswiderstand, der Abrieb und zusätzliche Geräuschemissionen klein gehalten. Alternativ bestehen der Gleitkontakt oder Schleifkontakt aus Bürsten aus Graphit und / oder Metall.

In einem anderen Ausführungsbeispiel weist das Handstück einen Griffteil, einen gewinkelt zum Griffteil angeordneten Halsteil und einen gewinkelt zum Halsteil angeordneten Handstückkopf auf, wobei die Werkzeugaufnahme im Handstückkopf angeordnet ist und die Triebeinheit eine im Wesentlichen gerade Antriebswelle umfasst, die den Griffteil und den Halsteil durchsetzt. Insbesondere besteht die Antriebswelle aus mehreren Wellenteilen, die verdrehsicher miteinander verbunden sind. Diese Ausgestaltung des Handstücks hat den Vorteil, dass über die gesamte Länge der Antriebswelle keine Getriebe oder ähnliche, nur lose miteinander verbundene Kupplungselemente zur Verbindung von Wellen oder Wellenteilen notwendig sind, an denen die elektrische Messsignalübertragung beeinflusst oder vollständig unterbrochen werden kann. Dieser Vorteil kommt bei einer einstückig ausgebildeten Welle besonders zum Tragen, ist jedoch auch bei mehrteiligen Antriebswellen gegeben, bei denen die Wellenteile eng, nicht oder nur schwer voneinander trennbar oder im Wesentlichen verdrehsicher miteinander verbunden sind, zum Beispiel durch eine formschlüssige oder kraftschlüssige Verbindung, durch Verpressen oder durch Verschweißen. Diese Ausgestaltung des Handstücks trägt somit in vorteilhafter Weise zu einer verbesserten und sichereren Signalübertragung und zu einem geringeren Verlust an Messsignalen bei.

Durch die oben beschriebene gerade, einstückige oder mehrteilige Ausbildung der Antriebswelle ist es in einem bevorzugten Ausführungsbeispiel möglich, diese durch nur zwei Lager, insbesondere durch zwei Wälz- oder Kugellager, zu lagern. Dies verringert in vorteilhafter Weise die Lärmentstehung bei Betrieb des Handstücks und verringert dessen Herstellungskosten.

Gemäß einer weiteren Ausführungsform ist zumindest ein Teil der Vorrichtung zur Übertragung von elektrischen Messsignalen mit einer Beschichtung zur Leitung der elektrischen Messsignale versehen ist, wobei die elektrische Leitfähigkeit der Beschichtung höher ist als die elektrische Leitfähigkeit von Stahl. Die Beschichtung enthält zumindest Anteile an Kupfer, Silber oder Gold. Diese Umkleidung von zumindest Teilen der Vorrichtung zur Übertragung von elektrischen Messsignalen, zum Beispiel der Werkzeugaufnahme, einer oder mehrerer Antriebswellen oder Wellenteil, den zweiten Verbindungsmitteln zwischen der Werkzeugaufnahme und der Triebeinheit oder anderen Bauteilen, ergab in Versuchen eine überraschend hohe Qualitätsverbesserung der Messsignalübermittlung. Diese wurde insbesondere dann erzielt, wenn alle Bauteile der Vorrichtung zur Übertragung von elektrischen Messsignalen beschichtet waren.

In einem Ausführungsbeispiel ist die Beschichtung mehrschichtig aufgebaut, wobei zumindest eine der Schichten als Haftvermittler ausgebildet ist und zwischen der Oberfläche des beschichteten Bauteils und einer oder mehreren weiteren Schichten angeordnet ist. Aufgrund der vielen zueinander bewegten und einander kontaktierenden Bauteile der Vorrichtung zur Übertragung von elektrischen Messsignalen ist ein derartiger Aufbau zur Vermeidung von Abrieb und zur Aufrechterhaltung der Unversehrtheit und einer möglichst vollen Funktionsfähigkeit der Beschichtung von großem Vorteil. Die Beschichtung umfasst zumindest eine Haftvermittlerschicht, die in einem Ausführungsbeispiel die gleich oder eine ähnliche Zusammensetzung hat wie eine der anderen Schichten der Beschichtung. In einem anderen Ausführungsbeispiel umfasst die Haftvermittlerschicht Nickel. In einem besonders bevorzugten Ausführungsbeispiel setzt sich die Beschichtung aus einer Nickel-Stricke - Schicht, einer Haftgold - Schicht und einer Reingoldschicht zusammen. Bevorzugt sind alle drei Schichten galvanisch auf die Außenhülse der Handstücks aufgebracht und weisen Schichtdicken von in etwa 0,2 µm - in etwa 2,5 µm auf.

In einem Ausführungsbeispiel ist zumindest ein Teil der Vorrichtung zur Übertragung von elektrischen Messsignalen, der mit einer Beschichtung zur Leitung der elektrischen Messsignale versehen ist, oberflächengeglättet, insbesondere elektrolytisch poliert. Damit wird eine verbesserte Haftung der Beschichtung auf der Vorrichtung zur Übertragung von elektrischen Messsignalen erzielt.

Gemäß einer Ausführungsform ist die Vorrichtung zur Übertragung von elektrischen Messsignalen des Weiteren mit zumindest mit einem elektrisch leitenden Draht versehen, der mit der Triebeinheit elektrisch verbunden ist und der zur Ableitung der elektrischen Messsignale von der Triebeinheit dient. Durch diese Maßnahme wird in vorteilhafter Weise eine verbesserte, zuverlässige und vereinfachte Weiterleitung der Messsignale auf das Anschlussteil, zum Beispiel eine Kupplung oder eine Antriebseinheit mit einem Motor, ermöglicht. Des Weiteren entfällt die Ausstattung des Anschlussteils mit Isolationsmitteln zur elektrischen Isolierung der Welle im Anschlussteil. Die Weiterleitung erfolgt in einem bevorzugten Ausführungsbeispiel über einen Steckkontakt auf einen im Anschlussteil angeordneten elektrisch isolierten Draht oder ein Kabel.

Bevorzugt ist der Draht oder sind mehrere Drähte zur Weiterleitung der Messsignale mit elektrischen Isoliermitteln umgeben und insbesondere mit einer isolierenden Außenhülle zu einem Kabel zusammengefasst, so dass eine Übertragung der Messsignale auf andere Bauteile unterbunden wird.

In einem Ausführungsbeispiel sind des Weiteren dritte Verbindungsmittel zur Verbindung des Drahts mit der Triebeinheit vorgesehen, die elastisch federnd ausgebildet sind. Durch diese Ausgestaltung wird eine zuverlässige elektrische Kontaktierung zwischen dem Draht und der Triebeinheit geschaffen, so dass Relativbewegungen zwischen dem Draht und der Triebeinheit, insbesondere Vibrationen der Triebeinheit, ausgleichbar sind. Bevorzugt umfassen die dritten Verbindungsmittel dazu ein Federelement, insbesondere eine Spiralfeder.

In einem weiteren Ausführungsbeispiel weisen die dritten Verbindungsmittel einen Stift oder eine Hülse mit einem abgerundeten, insbesondere kugeligen, Ende auf. Dadurch werden in vorteilhafter Weise die Kontaktfläche zwischen der Triebeinheit und den dritten Verbindungsmitteln und damit der Reibungswiderstand, der Abrieb und zusätzliche Geräuschemissionen klein gehalten. Selbstverständlich können die dritten Verbindungsmittel auch andere Kontaktelemente oder Bauteile aufweisen, zum Beispiel Bürsten aus Graphit und / oder Metall.

In einem Ausführungsbeispiel ragen die dritten Verbindungsmittel durch eine Lagerhülse der Triebeinheit und / oder sind darin befestigt. Damit ist in vorteilhafter Weise ein äußerst Platz sparender Einbau der dritten Verbindungsmittel und der Befestigungsmittel zur Fixierung der dritten Verbindungsmittel in das Handstück möglich. Die Befestigungsmittel sind zum Beispiel als Gewinde ausgebildet.

In einem Ausführungsbeispiel sind an der Triebeinheit, die Teil der Vorrichtung zur Übertragung der elektrischen Messsignale ist, anordenbare oder angeordnete erste elektrische Isoliermittel vorgesehen, die ein an die Anschlussvorrichtung anschließbares oder damit verbundenes Anschlussteil, insbesondere einen Motor, von der Vorrichtung zur Übertragung der elektrischen Messsignale isolieren. Damit wird sichergestellt, dass der Motor, der mit der Triebeinheit des Handstücks verbunden ist, und mit dem Motor verbundene Bauteile, insbesondere elektrische oder elektronische Bauteile, zum Beispiel Schaltungen oder Sensoren, zuverlässig von den die elektrischen Messsignale leitenden Bauteilen elektrisch getrennt sind.

Die ersten Isoliermittel sind dabei in einem Ausführungsbeispiel im Handstück, an der Triebeinheit oder als Teil der Triebeinheit, angeordnet. Dies hat den Vorteil, dass jedes an das Handstück angeschlossene Anschlussteil, unabhängig von dessen Aufbau und unabhängig davon, ob es selbst elektrische Isolationsmittel aufweist oder nicht, von der Triebeinheit, die Teil der Vorrichtung zur Übertragung der elektrischen Messsignale ist, elektrisch isoliert ist. Die ersten Isoliermittel umfassen zum Beispiel eine Welle oder einen Wellenteil, einen Zapfen oder eine Hülse aus Keramik oder Kunststoff. In einem anderen Ausführungsbeispiel sind die ersten Isoliermittel am oder als Teil des Anschlussteils ausgebildet und sind am Handstück anordenbar, wenn das Anschlussteil an das Handstück gekuppelt wird.

In einem Ausführungsbeispiel weist das Handstück eine Außenhülse aus elektrisch nicht isolierendem, bevorzugt metallischem, Material und zweite Isoliermittel zur elektrischen Isolierung der Vorrichtung zur Übertragung von elektrischen Messsignalen von der Außenhülse auf. Damit wird ein einfach herstellbares und gegenüber Reinigungsprozessen, insbesondere der Dampfsterilisation, unempfindliches Handstück geschaffen. Als zweite Isoliermittel dienen insbesondere Wälzlager mit nicht leitenden, insbesondere keramischen Komponenten, Kunststoffmäntel für Drähte und Kabel und aus Kunststoff oder Keramik hergestellte oder damit beschichtete Handstückbauteile, wie zum Beispiel Buchsen, Halteringe etc.

Ein Verfahren zur Herstellung eines Handstücks mit einer verbesserten Signalübertragung umfasst die Schritte:
- Zur Verfügung stellen eines dentalen Handstücks zur Behandlung von Wurzelkanälen mit einer Außenhülse,
- zur Verfügung stellen einer Anschlussvorrichtung zum Anschluss des Handstücks an eine Steuer- und Auswerteeinheit, an einen Messkreis mit einer Stromquelle und an eine Antriebseinheit, einer elektrisch leitenden Werkzeugaufnahme, einer elektrisch leitenden Triebeinheit, erster Verbindungsmittel zur Übertragung der Antriebsbewegung von der Triebeinheit auf die Werkzeugaufnahme und zweiter, elektrisch leitender Verbindungsmittel zur Übertragung der elektrischen Messsignale zwischen der Triebeinheit und der Werkzeugaufnahme, wobei die zweiten, elektrisch leitenden Verbindungsmittel als Gleit- oder Schleifkontakt ausgebildet sind,
- Einfügen der Werkzeugaufnahme, der Triebeinheit, der ersten und zweiten Verbindungsmittel und der Anschlussvorrichtung in das Handstück.

Bevorzugt ist in einem weiteren Verfahrensschritt vorgesehen, dass zumindest ein Teil der Vorrichtung zur Übertragung von elektrischen Messsignalen, die zum Beispiel zumindest Teile der Werkzeugaufnahme und der Triebeinheit umfasst, mit einer Beschichtung zur Leitung der elektrischen Messsignale versehen wird, deren elektrische Leitfähigkeit höher ist als jene von Stahl Die Beschichtung weist zum Beispiel Anteile an Gold, Silber oder Kupfer auf.

In einem anderen bevorzugten Ausführungsbeispiel ist als weiterer Verfahrensschritt vorgesehen, dass zumindest ein elektrisch leitender Draht zur Ableitung der elektrischen Messsignale von der Triebeinheit in das Handstück eingefügt und mit der Triebeinheit elektrisch verbunden wird.

Die Erfindung wird nachfolgend anhand eines bevorzugten Ausführungsbeispiels und Bezug nehmend auf die beigefügten Zeichnungen erläutert:
Figur 1 zeigt einen Längsschnitt durch ein dentales Handstück zur Behandlung von Wurzelkanälen und insbesondere zur Messung der Länge eines Wurzelkanals.
Figur 2 zeigt eine vergrößerte Darstellung des Handstückkopfs des Handstücks gemäß Figur 1.
Figur 3 zeigt eine vergrößerte Darstellung der Anschlussvorrichtung des Handstücks gemäß Figur 1.
Figur 4 zeigt einen vergrößerten Ausschnitt des Griffabschnitts des Handstücks gemäß Figur 1.

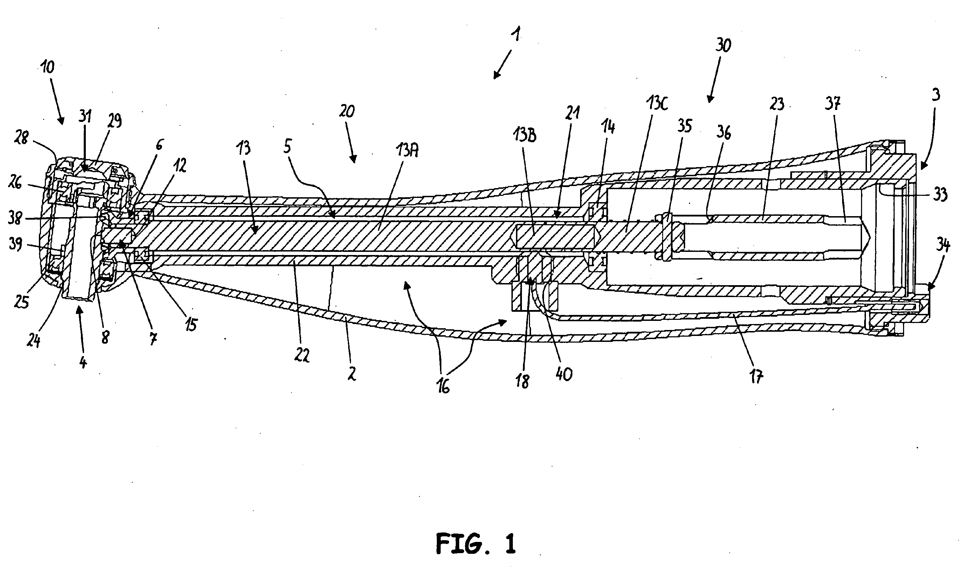

Das in Figur 1 dargestellte und als Winkelstück ausgebildete Handstück 1 zur Behandlung von Wurzelkanälen und insbesondere zur Messung der Länge eines Wurzelkanals umfasst einen Handstückkopf 10, der in einem Winkel von größer 90°, bevorzugt etwa 92° - 95° zu einem Halsteil 20 angeordnet ist, und einen Griffteil 30, der in einem Winkel von etwa 8° - 16° am Halsteil 20 anschließt. Eine Außenhülse 2 umgibt das Handstück 1, wobei die Außenhülse 2 einschließlich des Handstückkopfs 10 bevorzugt einteilig ausgebildet ist.

Am Handstückkopf 10 sind zwei einander gegenüberliegende Öffnungen vorgesehen: Die Öffnung 24 dient als Werkzeugaufnahmeöffnung, durch die ein Werkzeug, zum Beispiel eine Feile oder ein Bohrer, lösbar in einer im Handstückkopf 10 aufgenommenen Werkzeugaufnahme 4 einsetzbar ist. Die Werkzeugaufnahme 4 ist beweglich, insbesondere hin- und herbeweglich, oder, wie in Figur 1 dargestellt, rotierbar in Lagern 25, 26 gelagert.

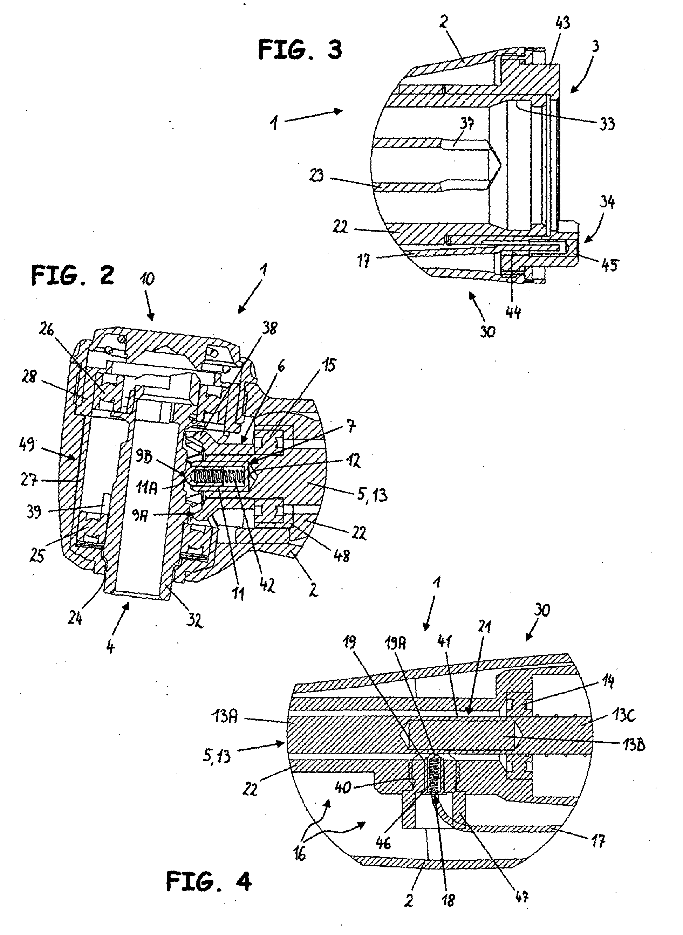

Die Kugellager 25, 26 und die Werkzeugaufnahme 4 sind in einer Hülse oder Patrone 49, die zum Beispiel durch eine Lagerbuchse 27 und einen Haltering 28 gebildet wird, im Handstückkopf 10 aufgenommen (siehe Figur 2). Die Lagerbuchse 27 und der Haltering 28 können einteilig oder als separate Bauteile ausgebildet sein. Sie trennen und isolieren die Kugellager 25, 26 und die Werkzeugaufnahme 4 vollständig von der Außenhülse 2 des Handstücks 1. Die Patrone 49 ist an Schultern und Vorsprüngen an der Innenseite der Handstückkopfhülse und durch einen Gewindering, der bevorzugt Teil eines Lösemechanismuses 31 zum Lösen des Werkzeugs ist, im Handstück 1 befestigt. Die Patrone 49 weist des Weiteren eine Öffnung auf, durch die die Triebeinheit 5 und die Vorrichtung 16 zur Übertragung der elektrischen Messsignale mit der Werkzeugaufnahme 4 in Verbindung stehen.

In der zweiten Öffnung 28 des Handstückkopfs 10 ist ein verschiebbarer Druckknopf 29 vorgesehen, der Teil eines Lösemechanismus 31 für das in der Werkzeugaufnahme 4 eingespannte Werkzeug ist. Sowohl der Aufbau des Lösemechanismuses 31 als auch der Werkzeugaufnahme 4 sind bekannt, so dass diese nicht im Detail beschrieben werden. Als Werkzeugaufnahme sind verschiedene Ausführungsformen verwendbar, zum Beispiel kraft- oder formschlüssige Werkzeugaufnahmen oder Kombinationen davon. Bevorzugt weisen die Werkzeugaufnahmen eine Hohlwelle 32 auf, in die das Werkzeug oder ein Werkzeugschaft durch eine Öffnung in der Werkzeugaufnahme einsetzbar ist. An der Hohlwelle 32 sind eine Spannzange oder ein Formschlusselement, zum Beispiel ein Gewinde, zum Fixieren des Werkzeugs und zur Übertragung des Drehmoments vorgesehen.

An dem dem Handstückkopf 10 gegenüber liegenden Ende des Handstücks 1 ist eine Anschlussvorrichtung 3 zum Anschluss des Handstücks 1 an eine Steuer- und Auswerteeinheit, an einen Messkreis mit einer Stromquelle und an eine Antriebseinheit vorgesehen. Die Anschlussvorrichtung 3 ist Teil einer Kupplungsvorrichtung, insbesondere einer Steck- oder Drehkupplung, zur Verbindung des Handstücks 1 mit einem Anschlussteil, zum Beispiel einer Antriebseinheit mit einem Elektromotor. Sie umfasst ein Kupplungsrohr 33, in das ein Kupplungszapfen des Anschlussteils einfügbar ist. In das Kupplungsrohr 33 ragt ein Teil der Triebeinheit 5, zum Beispiel Hohlwelle 23 mit Mitnehmer 37, zur Verbindung mit einer Welle des Anschlussteils, die mit dem Motor der Antriebseinheit in Verbindung steht. Die Anschlussvorrichtung 3 umfasst des Weiteren eine Kontaktvorrichtung 34, insbesondere einen Steckkontakt zur Übertragung der Messsignale der Wurzelkanallängenmessung auf das Anschlussteil.

Von der Anschlussvorrichtung 3 bis zur Werkzeugaufnahme 4 bzw. zwischen der Anschlussvorrichtung 3 und der Werkzeugaufnahme 4 erstreckt sich durch den Griffteil 30 und den Halsteil 20 des Handstücks 1 eine Triebeinheit 5 zur Übertragung der Antriebsbewegung auf die Werkzeugaufnahme 4. Die Triebeinheit 5 ist als gerade Antriebswelle 13 ausgebildet, wobei sie derart im Handstück 1 angeordnet ist, dass ihre Enden in etwa zentrisch in der Außenhülse 2 bzw. im Griffteil 30 und im Halsteil 20 angeordnet sind, wohingegen ein Abschnitt zwischen den beiden Enden exzentrisch in der Außenhülse 2 bzw. im Griffteil 30 und / oder im Halsteil 20 vorliegt.

Die Übertragung der Antriebsbewegung und des Drehmoments von der Triebeinheit 5 auf die Werkzeugaufnahme 4 erfolgt über erste Verbindungsmittel 6, die zwei miteinander kämmende Zahnräder 38, 39 umfassen. Das erste Zahnrad 38 ist an der Triebeinheit 5 befestigt, insbesondere auf die Antriebswelle 13 aufgepresst. Das zweite Zahnrad 39 ist mit der Werkzeugaufnahme 4, insbesondere der Hohlwelle 32 verbunden, zum Beispiel verpresst.

Die Antriebswelle 13 besteht aus mehreren Wellenteilen 13A, 13B, 13C sowie der Hohlwelle 23, wobei zumindest einige dieser Wellenteile derart miteinander verpresst, verschraubt oder in anderer Weise miteinander verbunden sind, dass sie im Wesentlichen keine Drehbewegung zueinander ausführen. Die Verbindung des Wellenteils 13C mit der Hohlwelle 23 erfolgt in bekannter Weise durch Aufnahme eines Endabschnitts des Wellenteils 13C in der Hohlwelle 23 und durch einen quer im Wellenteil 13C befestigten Stift 35, dessen Enden durch Schlitze 36 der Hohlwelle 23 ragen. Über eine Feder ist die Hohlwelle 23 gegen den Wellenteil 13C vorgespannt, so dass sie über den Wellenteil 13C verschiebbar ist.

Zwei Wälzlager, insbesondere Kugellager 14, 15, lagern die Antriebswelle 13 im Handstück 1. Eine Lagerhülse 22 umgibt die Antriebswelle 13 und dient als Lagersitz für die Kugellager 14, 15. Zumindest das näher zum Handstückkopf 10 angeordnete Kugellager 15 ist in einem Lagerelement 48, zum Beispiel einer Lagerkappe, aufgenommen, die das Kugellager 15 derart umgibt, dass es keinen direkten Kontakt mit der Lagerhülse 22 hat. Bevorzugt erstreckt sich die Lagerhülse 22 bis zur Anschlussvorrichtung 3, wobei sie zwei Abschnitte mit unterschiedlichen Innendurchmessern aufweist und wobei der Abschnitt mit dem größeren Innendurchmesser das Kupplungsrohr 33 bildet.

Über eine Vorrichtung 16 zur Übertragung der elektrischen Messsignale der Wurzelkanallängenmessung werden Messsignale oder Messdaten von dem als Messelektrode dienenden, in der Werkzeugaufnahme 4 aufgenommenen Werkzeug durch das Handstück 1 bis zur Anschlussvorrichtung 3 geleitet. Die Vorrichtung 16 zur Übertragung der elektrischen Messsignale wird dabei zumindest aus Teilen oder Abschnitten der Werkzeugaufnahme 4, der Triebeinheit 5 und eines von der Anschlussvorrichtung 3 bis in den Griffteil 30 oder Halsteil 20 ragenden Drahtes oder Kabels 17 gebildet. Alle diese Bauteile sind aus elektrisch leitendem Material, insbesondere aus Metallen wie Stahl oder Kupfer.

Zur Verbesserung der Übertragungsqualität der Messsignale sind an der Schnittstelle zwischen der Werkzeugaufnahme 4 und der Triebeinheit 5 zweite Verbindungsmittel 7 zur Übertragung der elektrischen Messsignale vorgesehen. Wie insbesondere auch aus der Figur 2 zu erkennen ist, sind die zweiten Verbindungsmittel 7 zumindest teilweise in einer Aufnahme 12, die bevorzugt die Form einer Sacklochbohrung aufweist, aufgenommen. Die zweiten Verbindungsmittel 7 umfassen bevorzugt einen Gleit- oder Schleifkontakt 8.

Die Ausbildung getrennter Verbindungsmittel 6, 7 zur mechanischen und zur elektrischen Kontaktierung hat den Vorteil, dass die Übertragung der elektrischen Messsignale nicht oder zumindest nicht ausschließlich über die ersten Verbindungsmittel 6 mit den Zahnrädern 38, 39 erfolgt, bei denen es wiederholt zur Unterbrechung bei der Signalübertragung kommt, wenn die beiden Zahnrädern 38, 39 entkuppeln und außer Eingriff geraten. Zur zusätzlichen Absicherung der Messsignalübertragung bestehen die Zahnräder 38, 39 jedoch auch aus elektrisch leitendem Material, so dass zumindest ein Teil der Signal- und Datenübertragung auch über die Zahnräder 38, 39 erfolgt.

Im Halsteil 20 oder im Griffteil 30 sind dritte, elektrisch leitende Verbindungsmittel 18 vorgesehen, über die die Messsignale von der Treibeinheit 5 auf den Draht 17 geleitet werden. Die dritten Verbindungsmittel 18 sind ebenfalls als Gleit- oder Schleifkontakt ausgebildet und ragen durch eine Bohrung 40 in der Lagerhülse 22 bis zur Triebeinheit 5.

Wie bereits beschrieben, umfasst die Triebeinheit 5 mehrere Wellen 13A, 13B 13C, 23, die im Halsteil 20 oder Griffteil 30 angeordnet sind und die direkt oder indirekt mit der Antriebseinheit, insbesondere einem Motor, bevorzugt einem Elektromotor, in Verbindung stehen. Wie ebenfalls bereits erläutert, gehören Teile der Triebeinheit 5 zur Vorrichtung 16 zur Übertragung von elektrischen Messsignalen. Um die Weiterleitung der elektrischen Messsignale zum Motor und zu damit verbundenen Bauteilen zu unterbinden, sind dazu am Handstück 1 erste elektrische Isolationsmittel 21 vorgesehen. Diese Isolationsmittel 21, die zum Beispiel aus Kunststoff oder Keramik hergestellt sind, umfassen den Wellenteil 13B sowie eine den Wellenteil 13B umgebende Buchse 41 (siehe Figur 4). Der Wellenteil 13B ist in je einer Aufnahme des Wellenteils 13A und 13C eingesetzt und darin verpresst oder verklebt. Die Buchse 41 ist auf den Wellenteil 13B aufgezogen und zwischen den beiden Wellenteilen 13A, 13C angeordnet. Selbstverständlich können die Buchse 41 und der Wellenteil 13B auch einteilig ausgebildet sein.

Zum Zwecke einer verbesserten Messsignalleitung der Wurzelkanallängenmessung ist zumindest eines der folgenden Bauteile mit einer Oberflächenbeschichtung, die Gold, Silber oder Kupfer mit zumindest 50% Anteil aufweist, versehen: Die Werkzeugaufnahme 4, die zweiten Verbindungsmittel 7, die Triebeinheit 5, insbesondere der Wellenteil 13A, die dritten Verbindungsmittel 18 oder zumindest ein Teil der Kontaktvorrichtung 34, insbesondere Steckbuchse 45 (siehe Figur 3).

Die Figur 2 zeigt eine vergrößerte Darstellung des Handstückkopfs 10 des Handstücks 1 aus Figur 1, in der der detaillierte Aufbau der als Gleit- oder Schleifkontakt 8 ausgebildeten zweiten Verbindungsmittel 7 erkennbar ist: In der Aufnahme 12 der Antriebswelle 13 ist eine Außenhülse 11 befestigt, zum Beispiel geklemmt, verlötet und / oder verklebt. In einer Öffnung der Außenhülse 11, die der Werkzeugaufnahme 4 zugewandt ist, befindet sich eine Schiebehülse mit einem abgerundeten, halbkugelförmigen und ebenfalls der Werkzeugaufnahme 4 zugewandten und diese kontaktierenden Ende 11A. Die Schiebehülse ist beweglich, bevorzugt verschiebbar, in der Außenhülse 11 gelagert, wobei sie insbesondere verschiebbar gegenüber den ersten Verbindungsmitteln 6 ausgebildet ist. Dadurch kann die Schiebehülse Relativbewegungen zwischen der Triebeinheit 5 und der Werkzeugaufnahme 4 ausgleichen, wodurch eine zuverlässige Messsignalübertragung möglich wird.

Besonders bevorzugt sind die zweiten Verbindungsmittel 7 elastisch federnd ausgebildet und umfassen zum Beispiel ein Federelement 42, insbesondere eine Spiralfeder, die die Schiebehülse gegen die Werkzeugaufnahme 4 vorspannt. Die Spiralfeder ist dabei mit einem Ende in der Schiebehülse und mit dem anderen Ende in der Außenhülse 11 aufgenommen. Die Leitung des elektrischen Messsignals erfolgt von der Werkzeugaufnahme 4 über das abgerundete, halbkugelförmige Ende 11A der Schiebehülse, das Federelement 42 und die Außenhülse 11 auf die Triebeinheit 5 bzw. den Wellenteil 13A.

Wie ebenfalls aus der Figur 2 zu erkennen ist, kontaktieren die beiden Verbindungsmittel 6, 7 die Werkzeugaufnahme 4 an unterschiedlichen, räumlich von einander getrennten Stellen 9A, 9B. Zumindest ein Teil der ersten Verbindungsmittel 6, nämlich Zahnrad 38, und die zweiten Verbindungsmittel 7 sind konzentrisch zur Längsachse der Antriebswelle 13 angeordnet, wobei Zahnrad 38 die zweiten Verbindungsmittel 7 radial umgibt.

In der Figur 3 ist das Griffteil-seitige Ende des Handstücks 1 aus der Figur 1 mit der Anschlussvorrichtung 3 vergrößert dargestellt. Die Anschlussvorrichtung 3 umfasst eine Zylinderbuchse 43, die über Verbindungsmittel, zum Beispiel einem Gewinde, mit der Außenhülse 2 verbunden ist. In die zylindrische Innenbohrung der Zylinderbuchse 43 ist ein Ende der Lagerhülse 22 eingefügt, so dass die Lagerhülse 22 durch die Zylinderbuchse 43 im Handstück 1 gelagert ist.

In der Außenwand der Zylinderbuchse 43, insbesondere in einem Abschnitt mit einem verdickten Durchmesser, ist eine Aufnahme, insbesondere eine Längsbohrung 44 vorgesehen, die Teil der Kontaktvorrichtung 34 ist. Die als Steckkontakt ausgebildete Kontaktvorrichtung 34 dient zur Verbindung der Vorrichtung 16 zur Übertragung von elektrischen Messsignalen, insbesondere eines Endes des Drahts 17, mit einem an die Anschlussvorrichtung 3 anschließbaren Anschlussteil. Das Ende des Drahts 17 ragt in die Längsbohrung 44 hinein und ist von einer, in die Längsbohrung 44 eingefügten, Steckbuchse 45 umgeben.

Die Figur 4 zeigt einen vergrößerten Ausschnitt des Handstücks 1 aus der Figur 1 mit den als Gleit- oder Schleifkontakt ausgebildeten dritten Verbindungsmitteln 18 zur Verbindung des Drahts 17 mit der Triebeinheit 5. Die dritten Verbindungsmittel 18 gleichen in ihrem Aufbau den zweiten Verbindungsmitteln 7 und umfassen eine Außenhülse 19 und eine Schiebehülse mit einem abgerundeten, halbkugelförmigen Ende 19A. Die Schiebehülse ist in einer Öffnung der Außenhülse 19, die der Triebeinheit 5 zugewandt ist, beweglich, bevorzugt verschiebbar, aufgenommen. Das halbkugelförmige Ende 19A ist ebenfalls der Triebeinheit 5 zugewandt und kontaktiert diese. Durch ihre Beweglichkeit kann die Schiebehülse Relativbewegungen, insbesondere Vibrationen, zwischen der Triebeinheit 5 und dem Draht 17 ausgleichen, wodurch eine zuverlässige Messsignalübertragung möglich ist.

Besonders bevorzugt sind die dritten Verbindungsmittel 18 elastisch federnd ausgebildet und umfassen zum Beispiel ein Federelement 46, insbesondere eine Spiralfeder, die die Schiebehülse gegen die Triebeinheit 5 vorspannt. Die Spiralfeder ist dabei mit einem Ende in der Schiebehülse und mit dem anderen Ende in der Außenhülse 19 aufgenommen.

Zur Befestigung der dritten Verbindungsmittel 18 im Handstück 1 ist die Außenhülse 19 mit eine Gewindebuchse 47 verbunden, zum Beispiel verpresst oder verlötet. Die Gewindebuchse 47 weist an ihrer Außenseite ein Gewinde auf, über das sie in eine Bohrung 40 der Lagerhülse 22 eingeschraubt ist. Die dritten Verbindungsmittel 18 ragen damit durch die Lagerhülse 22 zur Triebeinheit 5.

Durch eine weitere Öffnung in der Außenhülse 19 tritt der Draht 17 in den Innenraum der Außenhülse 19 ein, wo er mit dem Federelement 46, der Außenhülse 19 und / oder der Schiebehülse verbunden ist. Die Leitung des elektrischen Messsignals erfolgt von dem Antriebswellenteil 13A über das abgerundete, halbkugelförmige Ende 19A der Schiebehülse und das Federelement 46 auf den Draht 17.

Unmittelbar an die dritten Verbindungsmittel 18 anschließend sind die Isolationsmittel 21 mit dem Wellenteil 13B und der Buchse 41 angeordnet.

Die Außenhülse 2 des Handstücks 1 besteht aus elektrisch nicht isolierendem, bevorzugt metallischem, Material. Zur elektrischen Isolierung der Vorrichtung 16 zur Übertragung von elektrischen Messsignalen von der Außenhülse 2 sind zweite Isoliermittel vorgesehen. Als zweite Isoliermittel sind zumindest folgende Teile ausgebildet: Die Patrone 49 mit der Buchse 27 und dem Haltering 28, das Lagerelement 48 des Kugellagers 15, der Wellenteil 13B, die Buchse 41, die Zylinderbuchse 43 der Anschlussvorrichtung 3 sowie die Gewindebuchse 47 der dritten Verbindungsmittel 18. Diese Bauteile sind zum Beispiel aus Kunststoff und / oder Keramik hergestellt oder damit beschichtet. Selbstverständlich ist es möglich, auch andere Bauteile des Handstücks 1 zusätzlich oder alternativ zu den angeführten Bauteilen als elektrische Isoliermittel auszubilden, so zum Beispiel die Lager 14, 15 oder die Lagerhülse 22.

Die Erfindung ist nicht auf die beschriebenen Ausführungsbeispiele beschränkt. So ist das in der Figur 1 dargestellte Handstück und die Vorrichtung zur Übertragung von elektrischen Messsignalen zum Anschluss von elektrisch leitenden Werkzeugen ohne isolierende Hüllen ausgebildet. Bei derartigen Werkzeugen erfolgt die Messsignalleitung von dem als Elektrode dienenden Werkzeug über die Werkzeugaufnahme zur Triebeinheit.

Bei Werkzeugen, zum Beispiel Feilen mit Hüllen aus Kunststoff oder mit einem Kunststoffschaft, ist die elektrische Signalleitung zwischen dem Werkzeug und der Werkzeugaufnahme durch das Kunststoffteil unterbrochen. Für die Verwendung derartiger Werkzeuge ist somit eine Kontaktvorrichtung zur Verbindung eines elektrisch leitenden Abschnitts oder Teils des Werkzeugs mit der Werkzeugaufnahme notwendig. Dem gemäß können alle in diesem Dokument beschriebenen und dargestellten Handstücke und alle davon beschriebenen und dargestellten Ausführungsformen mit einer Kontaktvorrichtung oder Teilen davon ausgebildet oder damit verbindbar sein, so dass das Handstück auch mit isolierten Werkzeugen verwendbar ist.

Mögliche Ausführungsbeispiele einer derartigen Kontaktvorrichtung sind aus der Patentanmeldung EP 1.642.547 A1 bekannt. Selbstverständlich können jedoch auch andere Kontaktvorrichtung mit dem erfindungsgemäßen Handstück verwendet werden. Die Kontaktvorrichtung umfasst einen U-förmigen, elastischen Draht mit zwei Schenkeln, der außerhalb des Handstücks angeordnet ist. In ihrem vorderen Endbereich sind die beiden Schenkel nach innen gebogen. Dieser gebogene Bereich befindet sich im Wesentlichen unter der Öffnung der Werkzeugaufnahme, so dass ein in der Werkzeugaufnahme eingespanntes Werkzeug zwischen den beiden Schenkel hindurchläuft und an zwei Seiten von den Schenkeln kontaktiert wird.

Die Basis des U-förmigen Drahts ist mit einer Hülse und einem darin aufgenommenen Leitungsdraht oder Kabel verbunden, bevorzugt mittels einer Klemmverbindung. Die Hülse und der Leitungsdraht sind mit dem Handstück verbunden und zumindest teilweise darin aufgenommen. Die Hülse hat an einem Ende einen Flansch, der an der Außenhülse befestigt ist, bevorzugt durch Verkleben. Der Schaft der Hülse ragt durch eine Bohrung der Außenhülse nach außen, wobei der Durchmesser der Bohrung kleiner ist als jener des Flansches.

An dem dem Flansch gegenüberliegenden Ende weist die Hülse eine Nut mit zwei Leisten auf, wobei der Durchmesser der Nut etwas geringer ist als der Durchmesser der Basis des U-förmigen Drahtes. Da die Seitenwände der Nut federnd ausgebildet sind, weichen sie, wenn der Anwender die Basis an den Leisten anlegt und etwas Druck ausübt zu den Seiten hin aus, so dass die Basis in den an die Leisten anschließenden Abschnitt der Nut gelangt und durch die wieder in ihre ursprüngliche Position zurück gefederten Leisten fixiert wird. Zum Lösen zieht der Anwender am U-förmigen Draht, wodurch die Leisten wiederum seitlich ausweichen und die Basis freigeben.

Der Leitungsdraht weist ein erstes Ende und ein zweites Ende auf. Im hülsenförmigen Schaft der Hülse ist das erste Drahtende aufgenommen, das mit der in der Nut geklemmten Basis des U-förmigen Drahtes in Kontakt steht. Das zweite Ende des Leitungsdrahtes ist direkt oder indirekt über weitere Bauteile des Handstücks mit der Werkzeugaufnahme verbunden. Die weitere Signalleitung von der Werkzeugaufnahme erfolgt wie oben beschrieben.

## Patentansprüche

1. Dentales Handstück (1) zur Behandlung von Wurzelkanälen mit
- einer Außenhülse (2),
- einer Anschlussvorrichtung (3) zum Anschluss des Handstücks (1) an eine Steuer- und Auswerteeinheit, an einen Messkreis mit einer Stromquelle und an eine Antriebseinheit,
- einer elektrisch leitenden Werkzeugaufnahme (4) und
- einer elektrisch leitenden Triebeinheit (5) mit einer Antriebswelle (13),
wobei die Werkzeugaufnahme (4) und die Antriebswelle (13) mechanisch und elektrisch über Verbindungsmittel miteinander verbunden sind, so dass eine von der Antriebseinheit erzeugte Antriebsbewegung von der Antriebswelle (13) auf die Werkzeugaufnahme (4) übertragbar ist und elektrische Messsignale zwischen der Antriebswelle (13) und der Werkzeugaufnahme (4) übertragbar sind, wobei erste Verbindungsmittel (6) zur Übertragung der Antriebsbewegung und von den ersten Verbindungsmitteln (6) getrennt ausgebildete zweite, elektrisch leitende Verbindungsmittel (7) zur Übertragung der elektrischen Messsignale vorgesehen sind, wobei die zweiten, elektrisch leitenden Verbindungsmittel (7) als Gleit- oder Schleifkontakt (8) ausgebildet sind, **dadurch gekennzeichnet, dass**
die zweiten Verbindungsmittel (7) an der Antriebswelle (13) befestigt und kontaktierend gegen die Werkzeugaufnahme (4) vorgespannt sind und dass die zweiten Verbindungsmittel (7) zumindest teilweise in einer Aufnahme (12) der Antriebswelle (13) angeordnet sind.

2. Dentales Handstück (1) nach Anspruch 1, **dadurch gekennzeichnet, dass**
die zweiten Verbindungsmittel (7) beweglich in Bezug auf die ersten Verbindungsmittel (6) ausgebildet sind.

3. Dentales Handstück (1) nach Anspruch 1 oder 2, **dadurch gekennzeichnet, dass**
die zweiten Verbindungsmittel (7) elastisch federnd ausgebildet sind.

4. Dentales Handstück (1) nach einem der vorhergehenden Ansprüche, **dadurch gekennzeichnet, dass**
die beiden Verbindungsmittel (6, 7) die Werkzeugaufnahme (4) an unterschiedlichen Stellen (9A, 9B) kontaktieren.

5. Dentales Handstück (1) nach einem der vorhergehenden Ansprüche, **dadurch gekennzeichnet, dass**
die zweiten Verbindungsmittel (7) einen Stift oder eine Hülse (11) mit einem abgerundeten, insbesondere kugeligen, Ende (11A) aufweisen.

6. Dentales Handstück (1) nach einem der vorhergehenden Ansprüche, **dadurch gekennzeichnet, dass**
das Handstück (1) einen Griffteil (30), einen gewinkelt zum Griffteil (30) angeordneten Halsteil (20) und einen gewinkelt zum Halsteil (20) angeordneten Handstückkopf (10) aufweist, wobei die Werkzeugaufnahme (4) im Handstückkopf (10) angeordnet ist und die Triebeinheit (5) eine im Wesentlichen gerade Antriebswelle (13) umfasst, die den Griffteil (30) und den Halsteil (20) durchsetzt.

7. Dentales Handstück (1) nach Anspruch 6, **dadurch gekennzeichnet, dass**
die Antriebswelle (13) mehrere Wellenteile (13A, 13B, 13C, 23) umfasst, die verdrehsicher miteinander verbunden sind.

8. Dentales Handstück (1) nach Anspruch 6 oder 7, **dadurch gekennzeichnet, dass**
die Antriebswelle (13) durch nur zwei Lager, insbesondere durch zwei Wälzlager (14, 15), gelagert ist.

9. Dentales Handstück (1) nach einem der vorhergehenden Ansprüche, **dadurch gekennzeichnet, dass**
die Werkzeugaufnahme (4) und die Triebeinheit (5) zumindest einen Teil einer Vorrichtung (16) zur Übertragung von elektrischen Messsignalen bilden, wobei zumindest ein Teil der Vorrichtung (16) zur Übertragung von elektrischen Messsignale mit einer Beschichtung zur Leitung der elektrischen Messsignale versehen ist und wobei die elektrische Leitfähigkeit der Beschichtung höher ist als die elektrische Leitfähigkeit von Stahl.

10. Dentales Handstück (1) nach Anspruch 9, **dadurch gekennzeichnet, dass**
die Beschichtung zumindest Anteile an Kupfer, Silber oder Gold aufweist.

11. Dentales Handstück (1) nach Anspruch 9 oder 10, **dadurch gekennzeichnet, dass**
die Beschichtung mehrschichtig aufgebaut ist, wobei zumindest eine der Schichten als Haftvermittler ausgebildet ist.

12. Dentales Handstück (1) nach einem der Ansprüche 9, 10 oder 11, **dadurch gekennzeichnet, dass**
zumindest ein Teil der Vorrichtung (16) zur Übertragung von elektrischen Messsignalen, der mit einer Beschichtung zur Leitung der elektrischen Messsignale versehen ist, oberflächengeglättet, insbesondere elektrolytisch poliert, ist.

13. Dentales Handstück (1) nach einem der vorhergehenden Ansprüche, **gekennzeichnet durch**
zumindest einen elektrisch leitenden Draht (17), der mit der Triebeinheit (5) elektrisch verbunden ist, zur Ableitung der elektrischen Messsignale von der Triebeinheit (5).

14. Dentales Handstück (1) nach Anspruch 13, **dadurch gekennzeichnet, dass**
dritte Verbindungsmittel (18) zur Verbindung des Drahts (17) mit der Triebeinheit (5) vorgesehen sind.

15. Dentales Handstück (1) nach Anspruch 14, **dadurch gekennzeichnet, dass**
die dritten Verbindungsmittel (18) elastisch federnd ausgebildet sind.

16. Dentales Handstück (1) nach Anspruch 14 oder 15, **dadurch gekennzeichnet, dass**
die dritten Verbindungsmittel (18) einen Stift oder eine Hülse (19) mit einem abgerundeten, insbesondere kugeligen Ende (19A) aufweisen.

17. Dentales Handstück (1) nach einem der Ansprüche 14 - 16, **dadurch gekennzeichnet, dass**
die dritten Verbindungsmittel (18) durch eine Lagerhülse (22) der Triebeinheit (5) ragen und / oder darin befestigt sind.

18. Dentales Handstück (1) nach einem der vorhergehenden Ansprüche, **gekennzeichnet, durch**
an der Triebeinheit (5) anordenbare oder angeordnete elektrische Isoliermittel (21) zur elektrischen Isolierung eines an die Anschlussvorrichtung (3) anschließbaren Anschlussteils von der Triebeinheit (5).

19. Dentales Handstück (1) nach Anspruch 18, **dadurch gekennzeichnet, dass**
die elektrischen Isoliermittel (21) als Teil der Triebeinheit (5) ausgebildet sind.

20. Dentales Handstück (1) nach einem der vorhergehenden Ansprüche, **gekennzeichnet durch**
eine Außenhülse (2) aus elektrisch nicht isolierendem, bevorzugt metallischem, Material und **durch** Isoliermittel zur elektrischen Isolierung der Vorrichtung (16) zur Übertragung von elektrischen Messsignalen von der Außenhülse (2).

## Claims

1. A dental handpiece (1) for root canal treatment with
- an outer sleeve (2),
- a connecting device (3) for connecting the handpiece (1) to a control and analyzing unit, to a measurement circuit with a power source and to a drive unit,
- an electrically conducting tool receptacle (4), and
- an electrically conducting driving device (5) with a drive shaft (13),
wherein the tool receptacle (4) and the drive shaft (13) are mechanically and electrically connected by connecting means, so that a driving motion generated by the drive unit can be transmitted through the drive shaft (13) to the tool receptacle (4) and electrical measurement signals can be transmitted between the drive shaft (13) and the tool receptacle (4), wherein first connecting means (6) for the transmission of the driving motion and second, electrically conducting connecting means (7) for the transmission of the electrical measurement signals are provided, said second, electrically conducting connecting means (7) being designed separate from the first connecting means (6), wherein the second, electrically conducting connecting means (7) is designed as a sliding or slipping contact (8), **characterized in that**
the second connecting means (7) is mounted on the drive shaft (13) and is prestressed with contact against the tool receptacle (4) and **in that** the second connecting means (7) is arranged at least partially in a receptacle (12) of the drive shaft (13).

2. The dental handpiece (1) according to Claim 1, **characterized in that**
the second connecting means (7) is designed movably with respect to the first connecting means (6).

3. The dental handpiece (1) according to Claim 1 or 2, **characterized in that**
the second connecting means (7) is designed resiliently.

4. The dental handpiece (1) according to one of the preceding Claims, **characterized in that**
the two connecting means (6, 7) are in contact with the tool receptacle (4) at different locations.

5. The dental handpiece (1) according to one of the preceding Claims, **characterized in that**
the second connecting means (7) comprises a pin or a sleeve (11) with a rounded, in particular a spherical end (11A).

6. The dental handpiece (1) according to one of the preceding Claims, **characterized in that**
the handpiece (1) comprises a handle part (30), a neck part (20) arranged at an angle to the handle part (30) and a handpiece head (10) arranged at an angle to the neck part (20), wherein the tool receptacle (4) is arranged in the handpiece head (10) and the driving device (5) comprises an essentially straight drive shaft (13) which passes through the handle part (30) and the neck part (20).

7. The dental handpiece (1) according to Claim 6, **characterized in that**
the drive shaft (13) comprises multiple shaft parts (13A, 13B, 13C, 23) which are connected together in a twist-proof manner.

8. The dental handpiece (1) according to Claim 6 or 7, **characterized in that**
the drive shaft (13) is supported by only two bearings, in particular by two roller bearings (14, 15).

9. The dental handpiece (1) according to one of the preceding Claims, **characterized in that**
the tool receptacle (4) and the driving device (5) form at least a part of a device (16) for transmitting electrical measurement signals, wherein at least a portion of the device (16) for transmitting electrical measurement signals is provided with a coating for conducting the electrical measurement signals and wherein the electric conductivity of the coating is higher than the electric conductivity of steel.

10. The dental handpiece (1) according to Claim 9, **characterized in that**
the coating comprises at least some amounts of copper, silver or gold.

11. The dental handpiece (1) according to Claim 9 or 10, **characterized in that**
the coating is designed in multiple layers, wherein at least one of the layers is designed as an adhesion promoter.

12. The dental handpiece (1) according to one of the Claims 9, 10 or 11, **characterized in that**
at least a part of the device (16) for transmitting electrical measurement signals which is provided with a coating for conducting the electrical measurement signals is smoothed at the surface, in particular electrolytically polished.

13. The dental handpiece (1) according to one of the preceding Claims, **characterized by**
at least one electrically conducting wire (17) which is electrically connected to the driving device (5) for conducting the electric signals away from the driving device (5).

14. The dental handpiece (1) according to Claim 13, **characterized in that**
a third connecting means (18) for connecting the wire (17) to the driving device (5) is provided.

15. The dental handpiece (1) according to Claim 14, **characterized in that**
the third connecting means (18) is designed resiliently.

16. The dental handpiece (1) according to Claim 14 or 15, **characterized in that**
the third connecting means (18) comprises a pin or a sleeve (19) with a rounded, in particular a spherical end (11A).

17. The dental handpiece (1) according to one of the Claims 14 - 16, **characterized in that** the third connecting means (18) protrudes through a bearing sleeve (22) of the driving device (5) and/or is attached therein.

18. The dental handpiece (1) according to one of the preceding Claims, **characterized by**
an electric insulation means (21) which is or can be arranged on the driving device (5) for electric insulation of a connecting part that is connectable to the connecting device (3) from the driving device (5).

19. The dental handpiece (1) according to Claim 18, **characterized in that**
the electric insulation means (21) is designed as part of the driving device (5).

20. The dental handpiece (1) according to one of the preceding Claims, **characterized by**
an outer sleeve (2) of an electrically non-insulating, preferably metallic material and by insulation means for electric insulation of the device (16) for transmission of electric measurement signals from the outer sleeve (2).

## Revendications

1. Pièce à main dentaire (1) pour le traitement de canaux radiculaires, comprenant
- une gaine extérieure (2),
- un dispositif de connexion (3) pour connecter la pièce à main (1) à une unité de commande et d'analyse, à un circuit de mesure avec une source de courant et à une unité d'entraînement,
- un logement pour outil (4) électriquement conducteur, et
- une unité motrice (5) électriquement conductrice avec un arbre d'entraînement (13),
dans laquelle le logement pour outil (4) et l'arbre d'entraînement (13) sont reliés ensemble de façon mécanique et électrique par l'intermédiaire de moyens de connexion de sorte qu'un mouvement d'entraînement généré par l'unité d'entraînement peut être transmis par l'arbre d'entraînement (13) au logement pour outil (4) et des signaux de mesure électriques peuvent être transmis entre l'arbre d'entraînement (13) et le logement pour outil (4), dans laquelle des premiers moyens de connexion (6) pour transmettre le mouvement d'entraînement et des deuxièmes moyens de connexion (7) électriquement conducteurs, réalisés séparément des premiers moyens de connexion (6), pour transmettre les signaux de mesure électriques sont prévus, les deuxièmes moyens de connexion (7) électriquement conducteurs étant réalisés sous forme de contact à glissement ou à frottement (8),
**caractérisée en ce que**
les deuxièmes moyens de connexion (7) sont fixés à l'arbre d'entraînement (13) et précontraints en contact avec le logement pour outil (4), et **en ce que** les deuxièmes moyens de connexion (7) sont disposés au moins en partie dans un logement (12) de l'arbre d'entraînement (13).

2. Pièce à main dentaire (1) selon la revendication 1, **caractérisée en ce que**
les deuxièmes moyens de connexion (7) sont réalisés de façon mobile par rapport aux premiers moyens de connexion (6).

3. Pièce à main dentaire (1) selon les revendications 1 ou 2, **caractérisée en ce que**
les deuxièmes moyens de connexion (7) sont réalisés de façon élastiquement résiliente.

4. Pièce à main dentaire (1) selon l'une quelconque des revendications précédentes, **caractérisée en ce que**
les deux moyens de connexion (6, 7) entrent en contact avec les logements pour outil (4) à différents endroits (9A, 9B).

5. Pièce à main dentaire (1) selon l'une quelconque des revendications précédentes, **caractérisée en ce que**
les deuxièmes moyens de connexion (7) présentent une broche ou une douille (11) ayant une extrémité (11 A) arrondie, en particulier sphérique.

6. Pièce à main dentaire (1) selon l'une quelconque des revendications précédentes, **caractérisée en ce que**
la pièce à main (1) présente une partie de poignée (30), une partie de tige (20) disposée de façon coudée par rapport à la partie de poignée (30) et une tête de pièce à main (10) disposée de façon coudée par rapport à la partie de tige (20), le logement pour outil (4) étant disposé dans la tête de pièce à main (10) et l'unité motrice (5) comprenant un arbre d'entraînement (13) substantiellement droit traversant la partie de poignée (30) et la partie de tige (20).

7. Pièce à main dentaire (1) selon la revendication 6, **caractérisée en ce que**
l'arbre d'entraînement (13) comprend plusieurs parties d'arbre (13A, 13B, 13C, 23) reliées ensemble de façon résistante à la torsion.

8. Pièce à main dentaire (1) selon les revendications 6 ou 7, **caractérisée en ce que**
l'arbre d'entraînement (13) est logé sur deux paliers seulement, en particulier sur deux paliers à roulement (14, 15).

9. Pièce à main dentaire (1) selon l'une quelconque des revendications précédentes, **caractérisée en ce que**
le logement pour outil (4) et l'unité motrice (5) forment au moins une partie d'fun dispositif (16) pour transmettre des signaux de mesure électriques, dans laquelle au moins une partie du dispositif (16) pour transmettre des signaux de mesure électriques est munie d'un revêtement pour conduire les signaux de mesure électriques, et dans laquelle la conductibilité électrique du revêtement est supérieure à la conductibilité électrique de l'acier.

10. Pièce à main dentaire (1) selon la revendication 9, **caractérisée en ce que**
le revêtement présente au moins des pourcentages de cuivre, d'argent ou d'or.

11. Pièce à main dentaire (1) selon les revendications 9 ou 10, **caractérisée en ce que**
le revêtement est de structure multicouche, au moins l'une des couches étant réalisée comme un agent adhésif.

12. Pièce à main dentaire (1) selon l'une quelconque des revendications 9, 10 ou 11, **caractérisée en ce qu'**
au moins une partie du dispositif (16) pour transmettre des signaux de mesure électriques, munie d'un revêtement pour conduire les signaux de mesure électriques, est polie en surface, en particulier polie par électrolyse.

13. Pièce à main dentaire (1) selon l'une quelconque des revendications précédentes, **caractérisé par**
au moins un fil électriquement conducteur (17) qui est relié électriquement à l'unité motrice (5) pour dériver les signaux de mesure électriques de l'unité motrice (5).

14. Pièce à main dentaire (1) selon la revendication 13, **caractérisée en ce que**
des troisièmes moyens de connexion (18) pour relier le fil (17) à l'unité motrice (5) sont prévus.

15. Pièce à main dentaire (1) selon la revendication 14, **caractérisée en ce que**
les troisièmes moyens de connexion (18) sont réalisés de façon élastiquement résiliente.

16. Pièce à main dentaire (1) selon les revendications 14 ou 15, **caractérisée en ce que**
les troisièmes moyens de connexion (18) présentent une broche ou une douille (19) ayant une extrémité (19A) arrondie, en particulier sphérique.

17. Pièce à main dentaire (1) selon l'une quelconque des revendications 14 à 16, **caractérisée en ce que**
les troisièmes moyens de connexion (18) font saillie à travers une douille de palier (22) de l'unité motrice (5) et/ou y sont fixés.

18. Pièce à main dentaire (1) selon l'une quelconque des revendications précédentes, **caractérisée par**
des moyens d'isolation électrique (21) pouvant être ou étant disposés au niveau de l'unité motrice (5), pour isoler électriquement une pièce de connexion pouvant se connecter au dispositif de connexion (3) par rapport à l'unité motrice (5).

19. Pièce à main dentaire (1) selon la revendication 18, **caractérisée en ce que**
les moyens d'isolation électrique (21) sont réalisés comme une partie de l'unité motrice (5).

20. Pièce à main dentaire (1) selon l'une quelconque des revendications précédentes, **caractérisée par**
une gaine extérieure (2) en matériau non diélectrique, de préférence métallique, et par des moyens d'isolation pour isoler électriquement le dispositif (16) pour transmettre des signaux de mesure électriques par rapport à la gaine extérieure (2).
